Europäisches Patentamt

European Patent Office

Office européen des brevets

(11) Numéro de publication: **0 434 115 A1**

## (12) DEMANDE DE BREVET EUROPEEN

(21) Numéro de dépôt: 90203217.6

(22) Date de dépôt: 06.12.90

(51) Int. Cl.5: **C08K 3/00**, C08L 23/02

(30) Priorité: 18.12.89 BE 8901351

(43) Date de publication de la demande:
26.06.91 Bulletin 91/26

(84) Etats contractants désignés:
AT BE CH DE DK ES FR GB GR IT LI LU NL SE

(71) Demandeur: SOLVAY & Cie (Société
Anonyme)
Rue du Prince Albert, 33
B-1050 Bruxelles(BE)

(72) Inventeur: **Dehennau, Claude**
**Chemin des Postes, 236**
**B-1410 Waterloo(BE)**
Inventeur: **Dereppe, Michel**
**Clos du Dauphin, 2**
**B-1200 Bruxelles(BE)**

(74) Mandataire: Bouchoms, Maurice et al
Solvay & Cie Département de la propriété
industrielle 310, rue de Ransbeek
B-1120 Bruxelles(BE)

(54) **Masse plastique à base de polyoléfine et d'une charge minérale particulaire et structures multicouches constituées à partir de cette masse.**

(57) La masse plastique est constituée de 20 à 40 parties en poids d'une polyoléfine et de 80 à 60 parties en poids d'une charge minérale particulaire dont 1 à 5 parties en poids présente une granulométrie moyenne comprise entre 0,01 et 0,1 micron et le reste une granulométrie moyenne comprise entre 1 et 10 microns.

Cette masse permet la production d'articles monocouches ou multicouches tels que des feuilles et des tuyaux qui présentent une rigidité améliorée et une bonne résistance aux chocs.

EP 0 434 115 A1

## MASSE PLASTIQUE À BASE DE POLYOLÉFINE ET D'UNE CHARGE MINÉRALE PARTICULAIRE ET STRUCTURES MULTICOUCHES CONSTITUÉES À PARTIR DE CETTE MASSE.

La présente invention concerne une masse plastique à base de polyoléfine et d'une charge minérale particulaire permettant la production d'articles ayant une rigidité améliorée ainsi que des structures multicouches constituées à partir de cette masse.

Les matières plastiques telles que notamment les polyoléfines permettent le moulage de nombreux types d'articles utiles. Toutefois, il apparaît que pour certaines applications ces matières plastiques conduisent à des produits dont la rigidité laisse à désirer.

Ainsi, lorsqu'on envisage de produire, par extrusion, des articles tels que, par exemple, des tuyaux de grands diamètres à partir de polyoléfines, notamment pour réaliser des conduites pour des eaux usées telles que des collecteurs d'égoût, on constate que pour obtenir des tuyaux ayant une rigidité acceptable par rapport à celle de tuyaux en ciment habituellement exploités pour ce type d'application, on est amené à devoir produire des tuyaux ayant une forte épaisseur de paroi. Il en résulte que de tels tuyaux sont coûteux et très pesants ce qui compromet leur utilisation nonobstant leurs avantages en particulier en ce qui concerne la résistance dans le temps.

Pour remédier à cet inconvénient, il a déjà été envisagé de produire des structures telles que des tuyaux à partir de polyoléfines contenant une forte proportion en poids d'au moins une charge minérale.

En opérant de cette façon, il est certes possible de produire des tuyaux de grands diamètres ayant une bonne rigidité sans devoir recourir à des épaisseurs de parois exagérées et donc en réduisant la consommation de matières plastiques. Toutefois, ainsi qu'il est signalé dans la demande de brevet DE-A-21 17 077, l'incorporation d'une charge minérale dans des matières plastiques telles que les polyoléfines a pour effet néfaste d'entraîner une chute de la résistance aux chocs des articles produits. Aussi, on est généralement contraint d'incorporer au maximum 35 % en poids de matière de charge minérale pour éviter la production d'articles trop cassants.

Il a maintenant été constaté qu'il est possible d'incorporer une forte proportion pouvant atteindre 80 parties en poids d'une charge minérale dans des polyoléfines pour la production d'articles qui présentent néanmoins une résistance aux chocs acceptables.

La présente invention concerne dès lors, à titre principal, une masse plastique à base de polyoléfine et d'une charge minérale particulaire permettant la production d'articles ayant une rigidité améliorée qui se caractérise en ce qu'elle est constituée de 20 à 40 parties en poids d'une polyoléfine et de 80 à 60 parties en poids d'une charge minérale particulaire dont 1 à 5 parties en poids présentent une granulométrie moyenne comprise entre 0,01 et 0,1 micron et le reste une granulométrie moyenne comprise entre 1 et 10 microns.

Il a, en effet, été constaté qu'une masse plastique telle que définie ci-avant permet la production d'articles présentant une résistance aux chocs qui est nettement supérieure à celle d'articles produits à partir d'une masse plastique contenant une proportion nettement moindre d'une charge minérale ayant par exemple une granulométrie moyenne constante comprise entre 1 et 10 microns.

Il a encore été constaté qu'il est préférable de limiter la proportion de charge minérale de granulométrie moyenne comprise entre 0,01 et 0,1 micron à 1 à 5 parties en poids pour éviter des difficultés de mise en oeuvre.

D'une manière générale, les meilleurs résultats sont obtenus en utilisant une masse plastique constituée de 20 à 30 parties en poids d'une polyoléfine et de 80 à 70 parties en poids d'une charge minérale dont 1 à 5 parties en poids présentent une granulométrie moyenne comprise entre 0,01 et 0,1 micron et le reste une granulométrie moyenne comprise entre 1 et 10 microns.

Par polyoléfine, on entend désigner les homopolymères d'oléfines ainsi que les copolymères d'oléfines contenant au moins 70 % d'unités dérivées d'oléfines. A titre d'exemples non limitatifs, on peut citer notamment le polyéthylène, le polypropylène, les copolymères d'éthylène et de propylène etc.. ainsi que leurs mélanges, les résines à base de propylène et, en particulier, le polypropylène étant préférés.

A titre de charge minérale particulaire, on préfère, en général, mettre en oeuvre des charges se présentant sous la forme de particules arrondies non lamellaires. A titre d'exemples non limitatifs, on peut citer les sulfates de baryum ou de calcium, le carbonate de calcium et leurs mélanges, le carbonate de calcium étant préféré. La charge minérale peut avantageusement être enrobée notamment par des stéarates. Les charges de granulométries différentes peuvent être de même nature ou de natures différentes.

La masse plastique conforme à l'invention peut être produite aisément dans un malaxeur interne ou externe et être transformée directement ou après granulation en des articles tels que des feuilles, des plaques, des tuyaux etc.. par des méthodes de transformation classiques telles que l'extrusion, le pressage, le calandrage etc..

Lorsque la masse plastique conforme à l'invention est utilisée pour la production d'articles tels que, par exemple, des tuyaux appelés à être mis en contact avec des liquides acides et que la charge minérale particulaire mise en oeuvre est du carbonate de calcium, la résistance chimique dans le temps de l'article produit peut laisser à désirer du fait que la charge minérale peut être attaquée.

Pour éviter pareil inconvénient, ce type d'article peut être produit sous la forme d'une structure multicouche comportant au moins une couche constituée à partir d'une masse plastique conforme à l'invention et d'au moins une couche d'une polyoléfine pouvant contenir jusqu'à 20 % en poids d'une charge minérale particulaire, cette dernière couche étant seule mise en contact avec les milieux agressifs. Dans ce cas, la charge minérale particulaire introduite dans la couche de polyoléfine appelée à être mise en contact avec le milieu agressif doit évidement être choisie de façon à résister à ce milieu. A cet effet, on peut, par exemple, utiliser une charge minérale particulaire constituée par de la silice.

En particulier, lorsque ce type d'article est un tuyau, il est avantageux de réaliser celui-ci sous la forme d'une structure comportant une couche centrale constituée à partir d'une masse plastique conforme à l'invention et d'au moins deux couches externes d'une polyoléfine pouvant contenir jusqu'à 20 % en poids d'une charge minérale particulaire. De cette façon, on peut produire des tuyaux présentant un aspect extérieur particulièrement irréprochable et résistant aux milieux agressifs.

Les structures multicouches peuvent être produites par toute technique, la technique de coextrusion étant préférée.

La présente invention et les avantages qu'elle procure sont, en outre, illustrés par les exemples de réalisation pratique qui vont suivre.

Exemples 1R, 2, et 3

On a réalisé, par pressage, différentes feuilles à partir des compositions reprises au tableau 1.

La polyoléfine mise en oeuvre est du polypropylène commercialisé par la demanderesse sous la marque ELTEX®P HS 001

La charge minérale de 1 à 10 microns est du carbonate de calcium enrobé de granulométrie moyenne égale à 5 microns commercialisé par la Société OMYA S.A.

La charge minérale de 0,01 à 0,1 micron est du carbonate de calcium enrobé de granulométrie moyenne égale à 0,07 micron commercialisé par la demanderesse.

Pour réaliser les feuilles chargées, on réalise d'abord un mélange des constituants dans un mélangeur manuel de façon à former un prémix homogène qui est ensuite mis en oeuvre sur un malaxeur à cylindres de type TROESTER WCL (température des cylindres : 185°C, durée de malaxage 8 à 9 minutes, vitesse du cylindre avant 16 t/min, vitesse du cylindre arrière 12,5 t/min) pour former un crêpe d'une épaisseur moyenne de 5,5 mm. Le crêpe ainsi obtenu est alors introduit sur une presse à plateau de type LAFARGE (préchauffage de 6 minutes à 195°C) et pressé durant une minute (pression de 15 Kg par cm$^2$) de façon à obtenir après refroidissement et démoulage une feuille d'une épaisseur d'environ 5,2 mm et en tout cas la plus proche possible de l'épaisseur du crêpe initial.

La résistance aux chocs de la feuille ainsi obtenue est évaluée par la méthode PTI (poids tombant instrumenté) selon le mode opératoire décrit dans les normes DIN 53443 et ISO/DP-6603/2.3 du 23 janvier 1987 (percuteur de forme conique présentant un arrondi au point d'impact de 3,2 mm de rayon).

Les feuilles à tester sont fixées sur leur périphérie sur un support tubulaire de 40 mm de diamètre intérieur, le point d'impact du percuteur étant centré par rapport au centre du support tubulaire.

Les résultats enregistrés sont repris au tableau 1 et font apparaître que les feuilles produites à partir de masses plastiques conformes à l'invention (exemples 2 et 3) présentent une résistance aux chocs remarquable par rapport à des feuilles contenant uniquement 80 parties en poids de carbonate de calcium de granulométrie moyenne égale à 5 microns (exemple comparatif 1R).

TABLEAU 1

| EXEMPLE | COMPOSITION en parties en poids | | | Energie de rupture | |
|---|---|---|---|---|---|
| | poly-oléfine | charge minérale de 1 à 10 microns | charge minérale de 0,01 à 0,1 micron | J/mm d'épaisseur | Totale J |
| 1R | 20 | 80 | – | 0,86 | 4,8 |
| 2 | 20 | 79 | 1 | 1,33 | 7,5 |
| 3 | 20 | 77 | 3 | 1,75 | 9,8 |

Exemples 4R, 5R, 6 et 7

Dans ces exemples, on a opéré de la même façon que dans les exemples précédents mis à part que la polyoléfine mise en oeuvre est un copolymère à blocs du polypropylène commercialisé par la demanderesse sous la marque ELTEX®P RP 001.

Les résultats enregistrés repris au tableau 2, ci-après, font une nouvelle fois apparaître que les feuilles produites à partir de masses plastiques conformes à l'invention (exemples 6 et 7) présentent une résistance aux chocs remarquable par rapport à des feuilles ne contenant qu'une charge de granulométrie moyenne égale à 5 microns ou même moins chargée ce qui en principe ne peut qu'être favorable à la résistance au choc (exemple 5R).

## TABLEAU 2

| E X E M P L E | COMPOSITION en parties en poids | | | Energie de rupture | |
|---|---|---|---|---|---|
| | poly-oléfine | charge minérale de 1 à 10 microns | charge minérale de 0,01 à 0,1 micron | J/mm d'épaisseur | Totale J |
| 4R | 20 | 80 | – | 1,36 | 7,6 |
| 5R | 35 | 65 | – | 1,73 | 9,7 |
| 6 | 20 | 79 | 1 | 2,61 | 14,6 |
| 7 | 20 | 77 | 3 | 2,98 | 16,7 |

Exemple 8

Dans un mélangeur HENSCHEL KM 150, on réalise d'abord un mélange maître comprenant 20 parties en poids d'un fluff de polypropylène ELTEX® P HS 001 (polypropylène produit et commercialisé par la demanderesse), 0,4 partie en poids de distéarylthiodipropionate et 0,2 partie en poids d'un antioxydant phénolique.

Dans le mélange ainsi produit, on introduit ensuite 79 parties en poids de carbonate de calcium enrobé de granulométrie moyenne égale à 5 microns commercialisé par la Société OMYA S.A. et une partie en poids de carbonate de calcium enrobé de granulométrie moyenne égale à 0,07 micron commercialisé par la demanderesse.

Le mélange finalement produit est ensuite introduit dans une extrudeuse ANGER à double vis contrarotatives de 80 mm de diamètre équipée d'une filière plate Johnson de 100 mm de largeur et de 2 mm d'épaisseur et la lanière ainsi produite est enfin granulée au moyen d'une granulatrice à couteaux rotatifs CUMBERLAND.

Les granulés ainsi produits sont traités sur une extrudeuse SCAMEX de 45 mm de diamètre sous un taux de compression de 2,1 (vitesse de rotation de la vis 23 t/min, températures 170, 195, 225, 220° C) qui est raccordée à une filière de coextrusion du type décrit dans le brevet Etats-Unis 4 657 497 et adaptée pour la production d'un tuyau coextrudé comportant trois couches, le raccordement étant effectué de façon telle que la matière débitée constitue la couche centrale du tuyau produit.

Dans une extrudeuse MAILLEFER équipée d'une vis MAILLEFER de 30 mm de diamètre tournant à 27 t/min. (températures 171, 204, 209, 211° C), on introduit, par ailleurs, un copolymère de propylène produit et commercialisé par la demanderesse sous la marque ELTEX®P AF 800, cette extrudeuse étant raccordée à la filière de coextrusion de façon telle que la matière débitée constitue la couche extérieure du tuyau produit.

Enfin, dans une extrudeuse THORET équipée d'une vis de 4,1 de taux de compression et de 20 mm de diamètre tournant à 6 t/min. (températures 166, 195, 195, 195°C), on introduit également un copolymère identique à celui alimenté dans l'extrudeuse MAILLEFER, cette extrudeuse étant raccordée à la filière de coextrusion de façon telle que la matière débitée constitue la couche interne du tuyau produit.

La filière de coextrusion présente un diamètre externe de 54 mm et un diamètre interne de 38 mm. La filière est conditionnée de façon à extruder la couche externe à 209°C, la couche centrale à 220°C et la couche interne à 202°C, ces couches ayant des épaisseurs respectives de 0,25 mm, de 7,09 mm et de 2,03 mm.

Le tuyau ainsi produit est calibré sous une vitesse de traction de 16,7 cm/min.

On constate que le tuyau ainsi produit présente un aspect extérieur et intérieur lisse et irréprochable.

La résistance aux chocs du tuyau produit évaluée par la méthode PTI (poids tombant instrument) mentionnée ci-avant (percuteur cylindrique d'un diamètre de 12,7 mm et tuyau disposé et non fixé sur un support en V) donne les résultats ci-après : énergie totale de rupture en joules : 37,48 - énergie de rupture en J/mm d'épaisseur : 4.

Par ailleurs, la demanderesse a extrudé un tuyau monocouche contenant approximativement la même proportion de charge (35 parties en poids de polymère et 65 parties en poids de charge) et elle a ainsi constaté qu'un tel tuyau présente un aspect rugueux et est difficilement calibrable.

**Revendications**

**1.** Masse plastique à base de polyoléfine et d'une charge minérale particulaire permettant la production d'articles ayant une rigidité améliorée caractérisée en ce qu'elle est constituée de 20 à 40 parties en poids d'une polyoléfine et de 80 à 60 parties en poids d'une charge minérale particulaire dont 1 à 5 parties en poids présentent une granulométrie moyenne comprise entre 0,01 et 0,1 micron et le reste une granulométrie moyenne comprise entre 1 et 10 microns.

**2.** Masse plastique selon la revendication 1 caractérisée en ce qu'elle est constituée de 20 à 30 parties en poids d'une polyoléfine et de 80 à 70 parties en poids d'une charge particulaire dont 1 à 5 parties en poids présentent une granulométrie moyenne comprise entre 0,01 et 0,1 micron et le reste une granulométrie moyenne comprise entre 1 et 10 microns.

**3.** Masse plastique selon la revendication 1 ou 2 caractérisée en ce que la polyoléfine est une résine à base de propylène.

**4.** Masse plastique selon l'une quelconque des revendications 1 à 3 caractérisée en ce que la charge minérale particulaire est du carbonate de calcium.

**5.** Masse plastique selon l'une quelconque des revendications 1 à 4 caractérisée en ce que la charge minérale particulaire est enrobée.

**6.** Structure multicouche caractérisée en ce qu'elle comporte au moins une couche constituée à partir d'une masse plastique selon l'une quelconque des revendications 1 à 5 et au moins une couche d'une polyoléfine pouvant contenir jusqu'à 20 % en poids d'une charge minérale particulaire.

**7.** Structure multicouche selon la revendication 6 caractérisée en ce qu'elle comporte une couche centrale constituée à partir d'une masse plastique selon l'une quelconque des revendications 1 à 5 et au moins deux couches externes d'une polyoléfine pouvant contenir jusqu'à 20 % en poids d'une charge minérale particulaire.

**8.** Structure multicouche selon la revendication 6 caractérisée en ce qu'elle se présente sous la forme d'une feuille.

**9.** Structure multicouche selon la revendication 6 caractérisée en ce qu'elle se présente sous la forme d'un tuyau.

**10.** Structure multicouche selon la revendication 6 caractérisée en ce qu'elle est produite par coextrusion.

Office européen
des brevets

Numéro de la demande

# RAPPORT DE RECHERCHE
# EUROPEENNE

**EP 90 20 3217**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 186 475 (MOBIL OIL CORPORATION) <br> * page 3, ligne 1 - page 3, ligne 32; revendications 1-6 * <br> – – – | 1,2,4,5 | C 08 <br> K 3/00 <br> C 08 L 23/02 |
| A | EP-A-0 212 486 (HOECHST AKTIENGESELLSCHAFT) <br> * document en entier * <br> – – – – – | 1-5 | |

| | DOMAINES TECHNIQUES RECHERCHES (Int. Cl.5) |
|---|---|
| | C 08 K <br> C 08 L |

Le présent rapport de recherche a été établi pour toutes les revendications

| Lieu de la recherche | Date d'achèvement de la recherche | Examinateur |
|---|---|---|
| La Haye | 10 janvier 91 | WILSON A.J.D. |